# EUROPEAN PATENT SPECIFICATION

(11) **EP 3 236 293 B1**
(45) Date of publication and mention of the grant of the patent: **28.11.2018**
(21) Application number: 17166296.8
(22) Date of filing: 12.04.2017
(51) Int. Cl.: G01V 1/38, G08B 13/16

(54) **ENVIRONMENTAL MONITORING SYSTEM FOR COASTLINE APPLICATIONS**
UMWELTÜBERWACHUNGSSYSTEM FÜR KÜSTENANWENDUNGEN
SYSTÈME DE SURVEILLANCE DE L'ENVIRONNEMENT POUR DES APPLICATIONS DE LITTORAL

(30) Priority: 19.04.2016 IT UA20162721
(43) Date of publication of application: 25.10.2017
(73) Proprietor: Universita degli Studi di Napoli Parthenope, 80133 Napoli (IT)
(72) Inventor: SANTAMARIA, Raffaele, I-80143 Napoli (IT); GIORDANO, Francesco, I-80143 Napoli (IT); MATTEI, Gaia, I-80143 Napoli (IT)
(74) Representative: Borsano, Corrado

(56) References cited:
- WO-A1-2013/028157
- GB-A- 2 399 169
- US-A- 4 001 771
- US-A- 4 870 625
- US-A1- 2013 028 047

## Description

### [TECHNICAL FIELD]

The present invention relates to a system for monitoring a coastline environment and to the use of the same for monitoring a coastal stretch and fighting illegal fishing, preferably date mussel fishing.

In general, the present invention relates to monitoring activities for fighting illegal fishing on coastal seabeds, in particular for fighting date mussel fishing.

### [PRIOR ART]

Nowadays, illegal and invasive practices are widespread which lead to impoverishment of natural reserves in protected environments, such as natural habitats. One deprecable example of such practices is illegal fishing, particularly blast fishing or unauthorized mollusc and coral fishing.

One particularly important problem is illegal fishing of date mussels (*Lithophaga lithophaga* and *Pholas dactylus*), which are bivalve molluscs belonging to the *Mytilidae* family that live in niches dug to a depth of 20 cm in stones and rocks of the submerged coastline. Date mussels find their habitat on the seabeds of the Mediterranean coasts and of the Atlantic coasts of North Africa. Date mussels are much appreciated and sought-after as a tasty dish; however, in order to remove the mollusc from the rocky substrate (*Endolithion*) where it has installed itself, it is necessary to destroy, by using mechanical means, the external layer of the rock (*Epilithion*), which hosts a variety of other life forms. Date mussel fishing is therefore an activity that causes severe damage to the marine ecosystem, leading to desertification of multiple layers of rocky seabeds; this is a very invasive and destructive fishing activity, typically carried out by human operators with submarine equipment by using tools such as mattocks, chisels, mauls or pneumatic hammers.

Laws are in force which forbid fishing, consumption, possession and commerce of date mussels (for example, Decree Law no. 401 of July 1988 by the Ministry of the Merchant Marine in Italy, or EC rule 1967/2006 in all countries of the European Union).

However, the phenomenon of illegal date mussel fishing still persists and has a destructive impact on both the flora and the fauna of seabed rocks, which are transformed into submarine deserts.

Illegal date mussel fishing still continues in, among other places, Croatia, Serbia, Montenegro, Greece and various parts of Italy, e.g. the coast of Salento, the province of Bari, the Cinque Terre. Illegal date mussel fishing activities are particularly intense in Campania, in the protected marine area of Punta Campanella and in the surrounding areas (the rocky coast of Vico Equense and the Isle of Capri). In Campania alone, 70,000 square meters of seabed are destroyed on average every year.

Illegal date mussel fishing activities are typically carried out in nocturnal hours by underwater operators; this makes it difficult to visually locate the transgressors, and effective prevention demands considerable human and economical resources.

Patent application NA2011A000011 (IT-10-2011-901915435) filed in the name of Universita Degli Studi di Napoli Parthenope by inventor Prof. Francesco Giordano, relates to an environmental monitoring device comprising: a seismic sensor, such as a geophone, adapted to generate an electric signal representative of a mechanical vibration in the monitored terrestrial environment; a control unit adapted to receive the electric signal and to generate an alarm signal when vibrations are detected which are caused by illegal date mussel fishing activities on a seabed of the monitored terrestrial environment; a GSM telephone transceiver for transmitting the alarm signal and receiving commands for changing the operating state of the device.

Systems for detecting and locating submarine explosions are also known, which are aimed at fighting illegal blast fishing. For example, patent GB2399169A describes a system comprising a plurality of buoys, each one comprising a hydrophone; via wireless transmission, these buoys send the detected sound signals and their position to a processing centre located onshore. The data processing centre determines the location of the blast using the difference in the time of arrival of the sound wave at the different buoys, the positions of which are known.

WO 2013/028157 A1 discloses a system far detecting human activities comprising at least a hydrophone connected to a buoy and a control station comprising a server and an analysis module.

US 4 001 771 A discloses a system for detecting human activities comprising a plurality of geophones buried in the earth and a computer system.

US 4 870 625 A and US 2013/028047 A1 disclose examples of prior art documents showing systems for marine seismic surveys comprising a combination of hydrophones and geophones.

These known systems, however, suffer from the drawback that they cannot effectively monitor many cases of illegal fishing, such as, for example, date mussel fishing. In fact, the systems known in the art can be further improved as concerns the capability of immediately and accurately detecting the phenomena associated with such practices.

At present, therefore, no effective system is available for fighting illegal fishing on the seabeds of coastline environments, which causes damage to a habitat that, from a naturalistic viewpoint, must be safeguarded at all costs.

### [OBJECTS AND SUMMARY OF THE INVENTION]

Therefore, the present invention aims at providing a system for monitoring a coastline environment which can overcome some of the problems suffered by the prior art.

It is one object of the present invention to provide a system for monitoring a coastline environment which is alternative to prior-art solutions.

It is a particular object of the present invention to provide an environmental monitoring system using passive technologies, which can detect violations and ensure 24h surveillance of the coastline environment, without requiring any patrol personnel and vehicles or boats.

It is a particular object of the present invention to provide a system for monitoring a coastline environment which allows detecting, in an effective and timely manner, the occurrence of particular situations in which damage is being caused to the monitored environment, such as, for example, illegal date mussel fishing.

It is a further object of the present invention to provide a system for monitoring a coastline environment which can rapidly and effectively signal the occurrence of such detrimental situations, so as to allow for immediate intervention by the competent authorities in the monitored location where the alarm was triggered.

These and other objects of the present invention are achieved through a system for monitoring a coastline environment incorporating the features set out in the appended claims, which are an integral part of the present description.

A general basic idea of the present invention is to install a monitoring system near the coastline environment to be monitored. Such monitoring system comprises a marine part, structured as one or more marine sensing devices mounted on floating buoys and fitted with suitable electronics and sensors, such as a hydrophone, and further comprises a terrestrial part, structured as one or more terrestrial sensing devices comprising geophones to be installed on dry land. The system also comprises a control station. The network of sensing devices and the control station communicate with each other via communication modules, being preferably interconnected over a WiFi network. The control station receives the alarm signals generated by the sensing devices when human activities are detected in the monitored coastline environment, and processes identification information associated with the alarm signal, so as to transmit the alert to a web application and allowing monitoring activity from any device equipped with an Internet connection, such as smartphones, tablets, PCs and laptops.

Advantageously, this system for monitoring a coastline environment is based on an integration of two typologies of sensors in different areas of the coastline environment, i.e. a terrestrial area and a marine area. The sensors are respectively based on marine and terrestrial acoustic technologies, so that they can be installed in proximity to the area that needs to be monitored. Such sensors can detect the sound waves produced by human activities, e.g. the use of poaching equipment, such as big pneumatic hammers and/or chisels.

The combination of these two typologies of sensors, i.e. terrestrial and marine, allows better alarm management by detecting a broader range of signals and avoiding false alarms.

In addition, the combination of two sensor typologies, i.e. terrestrial and marine, ensures full coverage of the coastline environment, making up by means of the marine part for any terrestrial areas left uncovered because of inaccessibility due to the conformation of the ground or other orographic or naturalistic constraints.

In other words. the monitoring system is a novel system, the configuration of which ensures particularly effective application and use, and which, being complete, provides some advantages over a mere "sum" of two, i.e. terrestrial and marine, sensor technologies.

In general, this solution allows monitoring a coastline environment also from remote locations, effectively detecting environmental alarm situations in which particular mechanical stress is detected in the seabed, which generates a vibration representative of a human phenomenon of interest, such as, for example, seabed excavation, demolition, drilling or impacting activities typically associated, for example, with illegal date mussel fishing.

Therefore, the monitoring system proves to be completely autonomous and allows signalling, quickly and effectively, the occurrence of an environmental alarm situation and transmitting the alarm signal to remote personnel, so that appropriate action can be taken.

The solution for monitoring a coastline environment is particularly effective and useful for, among other things, discouraging and hence preventing illegal date mussel fishing. The present invention further relates to the use of a system for monitoring a coastline environment for the purpose of monitoring a coastal stretch and fighting illegal fishing, preferably date mussel fishing.

Further objects and advantages of the present invention will become more apparent from the following detailed description of a few embodiments thereof, which are supplied by way of non-limiting example.

### [BRIEF DESCRIPTION OF THE DRAWINGS]

Such exemplary embodiments will be described below with reference to the annexed drawings, which are also supplied merely by way of non-limiting example, wherein:
- Figure 1 shows an exemplary embodiment of a terrestrial sensing device according to the present invention;
- Figure 2 shows an exemplary embodiment of a marine sensing device according to the present invention;
- Figure 3 shows a first exemplary embodiment of a system for monitoring a coastline environment according to the present invention;
- Figure 4 shows another exemplary embodiment of a system for monitoring a coastline environment according to the present invention.

### [DETAILED DESCRIPTION OF THE INVENTION]

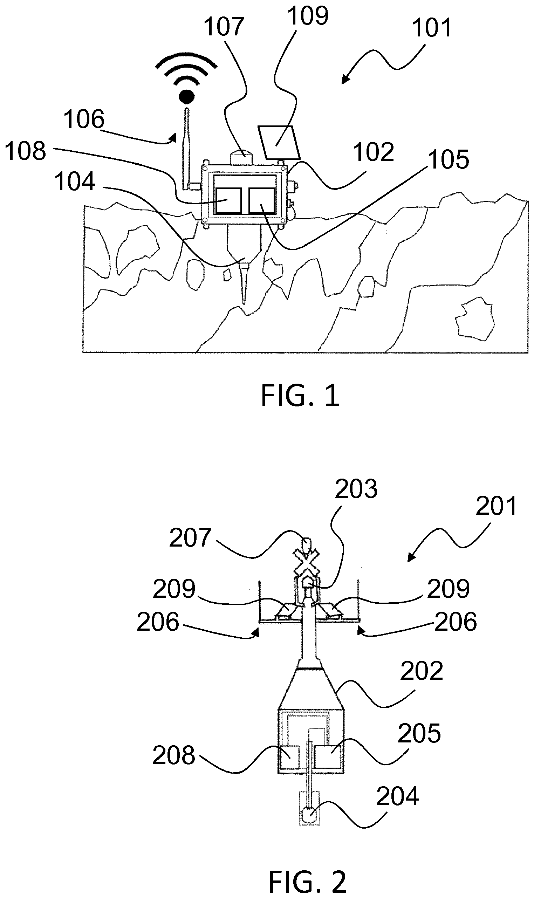

The example of Figure 1 illustrates a terrestrial sensing device 101 according to the present invention. The terrestrial sensing device 101 comprises a container 102, preferably a watertight container, adapted to adequately protect the internal electronic devices against bad weather and tampering.

The sensing device 101 further comprises a geophonic sensor 104 configured for being driven into a ground (preferably, a rocky ground) in the terrestrial environment where the terrestrial sensing device 101 is located. The geophonic sensor 104 is configured for detecting a vibration, such as a sonic vibration, propagating in the terrestrial environment. For this purpose, the terrestrial sensing device 101 comprises an electronic module 105 operationally connected to the geophonic sensor 104 and configured for analyzing the vibration detected by the latter, so as to be able to discriminate human activities in the monitored coastline environment, associated with the detected vibration.

Preferably, the electronic module 105 comprises suitable stages for amplification, conditioning and analysis of the signal representative of the detected vibration.

Preferably, the electronic module 105 comprises a data-logger microcomputer for recording the acquired data and the associated events. Thus, the terrestrial sensing device 101 is configured for recording the signals detected by the geophonic sensor on a mass storage unit, so that such signals can be downloaded at a later time.

Preferably, the electronic module 105 is configured for executing on-board software in order to analyse the signal representing the vibration, by following a routine for discriminating the target of interest.

The electronic module 105 is thus configured for generating an alarm signal based on the detected vibration representative of human activities in the area being monitored by the terrestrial sensing device 101.

Preferably, the monitored activities that can trigger an alarm are the following: excavation, demolition, drilling or impacting activities carried out on the reef and seabed of the area being monitored by the terrestrial sensing device 101. Such activities are, in fact, typically associated with illegal fishing, in particular date mussel fishing.

In a preferred embodiment, the terrestrial sensing device is configured for implementing the following functions:
1. Sound/vibration acquisition. Acquisition of the sound/vibration occurs through the geophonic sensor, preferably connected to a pre-amplifier module and to a sound sampling card, which transforms the sound/vibration into a digital signal suitable for recording and analysis.
2. Recording. Recording of the digital signal is effected by a connected microcomputer and the associated mass storage unit.
3. Analysis of the collected data. Analysis of the collected data occurs in two different steps: in the first (operating) step, an initial screening is directly performed during the data acquisition phase for the purpose of discriminating a possible alarm; the second (evolutionary) step provides for, once the data have been downloaded from the storage unit, post-processing the data by using dedicated software (and dedicated computers). The reason for this second step is mainly scientific, since it allows the creation of a database of acquired signals, so that the initial screening routine executed in the first step can be further optimized.

The terrestrial sensing device 101 further comprises a wireless communication module 106, preferably a WiFi data link.

By means of the wireless communication module 106, the terrestrial sensing device can transmit the alarm signal, if generated, to remote locations.

The terrestrial sensing device 101 preferably comprises a GPS module 107 adapted to acquire the geographic position of the terrestrial sensing device 101. Thus, still by means of the wireless communication module 106, updated localization information can be transmitted jointly with the alarm signal generated by the terrestrial sensing device 101 to remote locations.

In a preferred embodiment, based on the position information received from the GPS module 107, the electronic module 105 is further configured for detecting any changes in the position of the terrestrial sensing device 101, which are referable to removal of the device by intruders or ill-intentioned people or improper anchoring thereof to the ground. In such a case, the electronic module 105 is configured for sending a movement alarm by means of the wireless communication module 106, in order to signal the possible removal to competent authorities.

Preferably, the terrestrial sensing device 101 comprises a power supply system including at least one battery 108. In a preferred embodiment, the battery 108 can be recharged autonomously through the solar panels 109 associated with the container 102 (whether integral or separate, i.e. only electrically connected thereto) in a suitable position exposed to the solar beams. In this manner, the terrestrial sensing device 101 will be autonomous for a longer time, only requiring minimal and less costly maintenance.

Preferably, the terrestrial sensing device 101 comprises anti-removal anchor means. In general, the terrestrial sensing device 101 is adapted to be hidden in the environment to be monitored, and to operate therein without requiring any external connections to mains power or communication cables. To this end, the system sensors are contained in weather-resistant casings that can be easily concealed. Advantageously, this makes the terrestrial sensors also applicable to remote, wild environments, where the laying of electric cables might turn out to be a difficult task. Besides, this solution ensures better camouflage of the system, whereto no cables are connected, thus eliminating the risk that it might be found and made unserviceable by ill-intentioned people.

The example of Figure 2 illustrates a marine sensing device 201 according to the present invention. The marine sensing device 201 comprises a floating buoy 202 adapted to float in an aquatic environment, preferably fitted with suitable luminous or acoustic equipment 203.

The sensing device 201 further comprises a hydrophonic sensor 204 supported by the buoy 202 and immersed in the aquatic environment where the buoy 202 is located. The hydrophonic sensor 204 is configured for detecting a vibration, such as a sonic vibration, propagating in the aquatic environment.

For this purpose, the marine sensing device 201 comprises an electronic module 205 operationally connected to the hydrophonic sensor 204 and configured for analyzing the vibration detected by the latter, so as to be able to discriminate human activities in the monitored coastline environment, associated with the detected vibration.

Preferably, the electronic module 205 comprises suitable stages for amplification, conditioning and analysis of the signal representative of the detected vibration.

Preferably, the electronic module 205 comprises a data-logger microcomputer for recording the acquired data and the associated events. Thus, the marine sensing device 201 is configured for recording the signals detected by the hydrophonic sensor on a mass storage unit, so that such signals can be downloaded at a later time.

Preferably, the electronic module 205 is configured for executing on-board software in order to analyse the signal representing the vibration, by following a routine for discriminating the target of interest.

The electronic module 205 is thus configured for generating an alarm signal based on the detected vibration representative of human activities in the area being monitored by the marine sensing device 201.

Preferably, the monitored activities that can trigger an alarm are the following: excavation, demolition, drilling or impacting activities carried out on the seabed of the area being monitored by the marine sensing device 201. Such activities are, in fact, typically associated with illegal fishing, in particular date mussel fishing.

In a preferred embodiment, the marine sensing device is configured for implementing the following functions:
1. Sound/vibration acquisition. Acquisition of the sound/vibration occurs through the hydrophonic sensor, preferably connected to a pre-amplifier module and to a sound sampling card, which transforms the sound/vibration into a digital signal suitable for recording and analysis.
2. Recording. Recording of the digital signal is effected by a connected microcomputer and the associated mass storage unit.
3. Analysis of the collected data. Analysis of the collected data occurs in two different steps: in the first (operating) step, an initial screening is directly performed during the data acquisition phase for the purpose of discriminating a possible alarm; the second (research) step provides for, once the data have been downloaded from the storage unit, post-processing the data by using dedicated software (and dedicated computers). The reason for this second step is mainly scientific, since it allows the creation of a database of acquired signals, so that the initial screening routine executed in the first step can be further optimized.

The marine sensing device 201 further comprises a wireless communication module 206, preferably a WiFi data link.

By means of the wireless communication module 206, the marine sensing device can transmit the alarm signal, if generated, to remote locations.

The marine sensing device 201 preferably comprises a GPS module 207 adapted to acquire the geographic position of the marine sensing device 201. Thus, still by means of the wireless communication module 206, updated localization information can be transmitted jointly with the alarm signal generated by the marine sensing device 201 to remote locations.

In a preferred embodiment, based on the position information received from the GPS module 207, the electronic module 205 is further configured for detecting any changes in the position of the marine sensing device 201, which are referable to removal of the device by intruders or ill-intentioned people or improper anchoring thereof to the seabed. In such a case, the electronic module 205 is configured for sending a movement alarm by means of the wireless communication module 206, in order to signal the possible removal or improper anchorage to competent authorities.

Preferably, the marine sensing device 201 comprises a power supply system including at least one battery 208. In a preferred embodiment, the battery 208 can be recharged autonomously through the solar panels 209 mounted aboard the buoy 202 in a suitable position exposed to the solar beams. In this manner, the marine sensing device 201 will be autonomous for a longer time, only requiring minimal and less costly maintenance. Preferably, the marine sensing device 201 comprises means for anchoring it to the seabed (not shown), so as to constrain the buoy 202 in a predetermined geographic position within a reasonable tolerance.

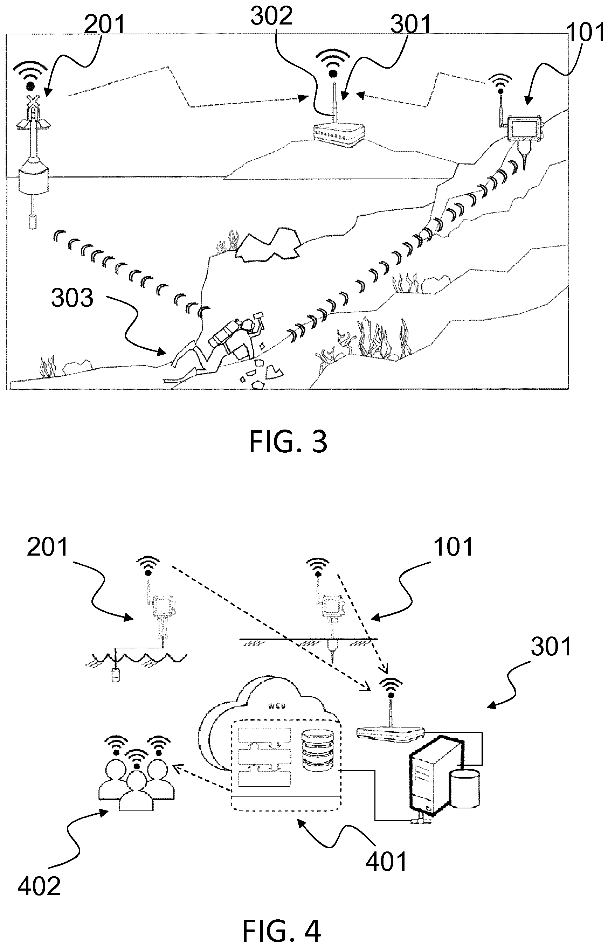

The example of Figure 3 illustrates a system for monitoring a coastline environment, which comprises a terrestrial sensing device 101 and a marine sensing device 201 as already described. In alternative embodiments, the system for monitoring a coastline environment may comprise a plurality of terrestrial and marine sensing devices, even in different numbers, for increased coverage and extension of the coastline environment to be monitored.

The monitoring system further comprises a control station 301 to be associated with the terrestrial sensing device 101 and marine sensing device 201.

The control station, which is preferably installed on dry land near the coastline environment to be monitored as exemplified in the drawing, comprises a wireless communication module 302, and is therefore configured for receiving the alarm signals and the associated information from the terrestrial sensing device 101 and the marine sensing device 201, as exemplified by the dashed arrows in the drawing. Preferably, the wireless communication module 302 comprises a module operating in accordance with the WiFi protocol.

The control station 301 also comprises an electronic module (not shown) configured for processing identification information associated with the alarm signal received, from time to time, from the terrestrial sensing device 101 and/or from the marine sensing device 201.

The control station 301 is further configured, as will be described more in detail below, for transmitting the identification information over the Internet network to a web application for generating an alert. For this purpose, the control station 301 is connected to the Internet network via a wired or wireless (e.g. WiFi) connection, which can be used for exchanging information with other devices.

The terrestrial sensing device 101 and the marine sensing device 201 are equipped with sensors and software/electronic modules that allow for 24h monitoring of the coastal area, sending alarm signals when the sensors detect sonic vibrations caused by human activities, such as the extractive activity of poachers, in particular poachers of date mussels 303, who, by using submarine equipment, damage the seabed in the monitored coastal stretch.

If vibrations associated with illegal fishing are detected, a local luminous siren is preferably activated along with the transmission of the alarm signal from the terrestrial sensing device 101 and/or from the marine sensing device 102, so that the effraction can be located more easily.

Furthermore, the system is configured for sending the effraction data to a web server, as will be further explained below.

According to the present invention, in fact, a plurality of marine or terrestrial sensing devices are positioned along the coastal stretch to be monitored. Each one of these sensing devices cooperates with the other sensing devices to provide simultaneous environmental monitoring of an extended coastal stretch. In any case, the extension of the environment, i.e. the coastal stretch, monitored by each monitoring system essentially depends on the morphological characteristics of the environment itself, on sensor sensitivity, and on the precision and accuracy achievable by the electronic modules that process the signals of the detected vibrations. When high accuracy is desired, it is possible to monitor one environment in a redundant manner by using multiple devices within the same monitoring system.

In this example, the monitoring system is detecting the presence of intrusive activity in the monitored environment, i.e. date mussel fishing being carried out through the use of a hammer that is destroying the seabed.

In accordance with the above description, the monitoring system detects the intrusive activity of the diver 303 by verifying the characteristics of the vibration signal detected by both the geophone of the sensing device 101 and the hydrophone of the sensing device 201, which generate (individually) an alarm signal that is then transmitted to the control station 301.

The alert thus generated is then transmitted to a competent authority for the protection and surveillance of the monitored coastline environment, e.g. the coastguard.

Advantageously, the possible presence of a monitoring system, typically camouflaged in the monitored environment thanks to the operating self-sufficiency ensured by the electric batteries, acts as a deterrent to ill-intentioned people, thus contributing to reducing undesired intrusive phenomena.

The example of Figure 4 illustrates a further possible embodiment of a system for monitoring a coastline environment, in particular as concerns the operation thereof.

When the terrestrial sensing device 101 or the marine sensing device 201 discriminate human activities in the monitored coastline environment on the basis of the detected vibration, an alarm signal is generated and transmitted to the remote control station 301 via a wireless connection. The control station 301 is, in fact, adapted to connect to the whole set of marine and terrestrial sensors, preferably over a local WiFi network.

As aforementioned, the control station 301 comprises an electronic control module, such as a computer, for processing the information received in the alarm signals. In one exemplary embodiment, the control station further comprises a local server, a router, an Internet connection, suitable software such as a MySQL database, and a power supply system for keeping the control station in operation 24 hours a day.

In particular, the control station 301 acquires the identification information associated with the alarm signals and makes it available, via an Internet connection, to a web platform 401.

The identification information associated with the alarm signal comprises logical alarm information and also, preferably, information about the position of the sensing device that generated the alarm, so as to restrict the alert to a definite area of the monitored environment. Preferably, the position information is gathered from the GPS position computed by each sensing device and updated in real time.

The web platform 402 comprises a web application configured for signal analysis, management and storage.

In particular, the web platform 402 is configured for generating and transmitting an alert in order to signal the occurrence of a violation in the monitored coastline environment.

For example, the alert may be received by a cellular phone, a smartphone, a tablet, etc. owned by competent authorities 402 for environmental protection such as, for example, the harbour master's office in the case of date mussel fishing. Thanks to the information contained in the alert message, the authorities 402 can identify the monitoring system, the time of the alarm, and the precise location of the sensing devices that signalled the alarm. In particular, the alert can be displayed on the user interface of the web application and can also, at the same time, be automatically forwarded to the competent operator via an Alert message (e.g. Instant Message, SMS, e-mail or other communication methods suitable for this purpose), so that such operators can be immediately informed and, if necessary, can take appropriate action on site. In general, the monitoring activity is also available in real-time, e.g. through the use of a management application such as "webGIS".

In a preferred embodiment, the first electronic control module 105 and/or the second electronic control module 205 and/or the third electronic module of the control station 301 are further configured for recording the vibration signals detected by the geophonic sensor or by the hydrophonic sensor on a mass storage unit.

The recorded signals can then be processed by processing means for scientific purposes, for better reliability in the discrimination of human activities in the monitored coastline environment, associated with the detected vibration. Preferably, the recorded data are available through the same web application 401.

### [INDUSTRIAL APPLICABILITY]

The present monitoring system finds a preferred application in the surveillance of coastal stretches for preventing date mussel fishing.

The monitoring system proposes the use of a synergic action between two signal acquisition technologies (marine hydrophones and terrestrial geophones), integrating them with tools for remote sharing and fruition of information (web platform, WebGis software, etc.)

The terrestrial and marine sensing devices are used simultaneously in a complementary manner, thus broadening the features and range of the monitoring system as a whole and ensuring a more effective protection of the monitored coastline environment.

More in detail, some technical improvements of the present invention concern:
- Synergy between two actions, which allows the creation of a novel integrated system that is more effective than the simple sum of two technologies.
- Use of web technologies.
- Larger area monitored by a single sensor; in particular, it should be taken into account that sound propagates farther in water, since it is less affected by environmental obstacles.
- Improved coverage of the monitored environment due to elimination, thanks to the use of marine sensing devices, of any blind sectors left uncovered because of the impossibility of installing terrestrial sensing devices in impervious coastal areas not allowing easy access on foot.
- Easier installation and maintenance of the network of terrestrial and marine sensors.
- Synergic use of two different sensor technologies and typologies, resulting in improved effraction detection accuracy and minimization of false alarms.
- Possibility of monitoring the coastline environment 24 hours a day, 365 days a year, even from remote locations through the use of any device provided with an Internet connection (smartphone, tablet, personal computer, etc.), thanks to the use of the web platform.
- No need for the presence of personnel in the protected marine area for preventive purposes, since action may be taken only when an alarm is triggered; this provides a considerable advantage in terms of costs and human resources.
- The creation of a database of events and alarm signals provides the authorities responsible for the protected coastline environment with appropriate tools for more effectively managing and evaluating any protection actions.
- The use of completely passive, non-intrusive technology does not jeopardize at all the environmental integrity of natural reserves.
- Easiness of installation, maintenance and expansion of the system due to its modular structure.

It is apparent that many other changes may be made to the system exemplified herein by those skilled in the art without departing from the protection scope of the invention as set out in the appended claims.

For example, should one want to optimize the present invention for monitoring a particular coastline environment, it would be possible to use different types of sensors, geophones and hydrophones and different techniques for analyzing the detected signals in order to adapt the system to the frequencies of interest for the detection of a particular kind of environmental alarm.

## Claims

1. System for monitoring a coastline environment, comprising at least one terrestrial sensing device (101) and at least one marine sensing device (201),
wherein said terrestrial sensing device (101) comprises:
a geophonic sensor (104) adapted to be driven into a ground ashore or on land for detecting a first vibration propagating in said ground,
a first electronic module (105) configured for analyzing said first vibration and
discriminating human activities in said monitored coastline environment which are associated with said first vibration, and further configured for generating a first alarm signal when human activities are detected,
a first wireless communication module (106) configured for transmitting said first alarm signal to remote locations;
and wherein said marine sensing device (201) comprises:
a buoy (202) configured for floating in an aquatic environment,
a hydrophonic sensor (204) supported by said buoy (202) and configured for being immersed in said aquatic environment for detecting a second vibration propagating in said aquatic environment,
a second electronic module (205) configured for analyzing said second vibration and discriminating human activities in said monitored coastline environment which are associated with said second vibration, and further configured for generating a second alarm signal when human activities are detected;
a second wireless communication module (206) configured for transmitting said second alarm signal to remote locations;
wherein said system for monitoring a coastline environment further comprises a control station (301), wherein said control station (301) comprises:
a third wireless communication module (302) configured for receiving said first alarm signal and said second alarm signal,
a third electronic module configured for processing identification information associated with said first alarm signal and said second alarm signal,
an Internet connection module configured for transmitting said identification information to at least one web application (401) for generating an alert.

2. System for monitoring a coastline environment according to claim 1, wherein said first communication module (106), said second communication module (206) and said third communication module (302) comprise each a communication module compliant with a WiFi protocol.

3. System for monitoring a coastline environment according to claim 1 or 2, wherein said marine sensing device (201) further comprises a first GPS module (207) configured for acquiring a first geographical position of said marine sensing device (201), wherein updated localization information about said first geographical position is comprised in said second alarm signal generated by said marine sensing device (201).

4. System for monitoring a coastline environment according to any one of claims 1 to 3, wherein said terrestrial sensing device (101) further comprises a second GPS module (107) configured for acquiring a second geographical position of said terrestrial sensing device, wherein updated localization information about said second geographical position is comprised in said first alarm signal generated by said terrestrial sensing device (101).

5. System for monitoring a coastline environment according to any one of claims 3 or 4, wherein said first electronic module (105) or said second electronic module (205) are further configured for detecting in real time the position of said terrestrial sensing device (101) or marine sensing device (201), respectively, by means of said second GPS module (107) or said first GPS module (207), and wherein said first electronic module (105) or said second electronic module (205) are further configured for detecting any position changes and for sending, by means of said first wireless communication module (106) or said second wireless communication module (206), a movement alarm in order to signal the possible removal of said terrestrial sensing device (101) or marine sensing device (201) from the monitored environment.

6. System for monitoring a coastline environment according to any one of claims 1 to 5, wherein said identification information comprises at least the position of said at least one terrestrial sensing device (101) or said at least one marine sensing device (201) that generated said first alarm signal or said second alarm signal.

7. System for monitoring a coastline environment according to any one of claims 1 to 6, wherein at least said first electronic control module (105) or at least said second electronic control module (205) or at least said third electronic module is further configured for recording said signals respectively detected by said geophonic sensor (104) or said hydrophonic sensor (204) on a mass storage unit, and wherein the recorded signals are subsequently processable by processing means in order to improve the reliability of said discrimination of human activities in said monitored coastline environment, associated with said first or second vibration.

8. System for monitoring a coastline environment according to any one of claims 1 to 7, wherein said terrestrial sensing device (101) and said marine sensing device (201) comprise each a power supply system comprising at least one battery (108, 208), and preferably comprise solar cells (109, 209) for autonomous recharging of said at least one battery (108, 208).

9. System for monitoring a coastline environment according to any one of claims 1 to 8, wherein said terrestrial sensing device (101) further comprises a watertight container (102) and ground anchor means configured for preventing removal of said watertight container (102) from said ground.

10. System for monitoring a coastline environment according to any one of claims 1 to 9, wherein said marine sensing device (101) further comprises means for anchoring it to the seabed in said coastline environment.

11. System for monitoring a coastline environment according to any one of claims 1 to 10, wherein said human activities are illegal fishing activities (303), and wherein said first electronic module (105) and said second electronic module (205) are configured for associating alarm signals with said first vibration and/or said second vibration when they are representative of seabed excavation, demolition, drilling or impacting activities.

12. Use of a system for monitoring a coastline environment according to any one of claims 1 to 11 for monitoring a coastal stretch and fighting illegal fishing, preferably date mussel fishing, wherein said terrestrial sensing device (101) is installed on dry land in a rocky coastal stretch of said coastline environment, and wherein said marine sensing device (201) is further installed off the same or a different coastal stretch of said coastline environment, and wherein said control station (301) is configured for transmitting said alert to an authority (402) for protection and surveillance of said coastline environment.

13. Use according to claim 12, wherein a plurality of terrestrial sensing devices are installed on dry land, and wherein a plurality of marine sensing devices are further installed, wherein all terrestrial sensing devices and marine sensing devices are configured for communicating with the same control station.

## Patentansprüche

1. System zum Überwachen einer Küstenumgebung, umfassend mindestens eine terrestrische Erfassungsvorrichtung (101) und mindestens eine marine Erfassungsvorrichtung (201), wobei die terrestrische Erfassungsvorrichtung (101) umfasst: einen geophonen Sensor (104), der angepasst ist, in einen Boden an Land oder an Land getrieben zu werden, um eine erste Vibration zu erfassen, die sich in dem Boden ausbreitet, ein erstes elektronisches Modul (105), das konfiguriert ist, um die erste Vibration zu analysieren und menschliche Aktivitäten in der überwachten Küstenumgebung zu unterscheiden, die der ersten Vibration zugeordnet sind, und ferner konfiguriert ist, um ein erstes Alarmsignal zu erzeugen, wenn menschliche Aktivitäten erfasst werden, ein erstes drahtloses Kommunikationsmodul (106), das konfiguriert ist, um das erste Alarmsignal an entfernte Orte zu übertragen;
und wobei die marine Erfassungsvorrichtung (201) umfasst: eine Boje (202), die zum Schwimmen in einer aquatischen Umgebung konfiguriert ist, einen hydrophonen Sensor (204), der von der Boje (202) getragen ist und konfiguriert ist, um in die aquatische Umgebung eingetaucht zu werden, um eine zweite Vibration zu erfassen, die sich in der aquatischen Umgebung ausbreitet, ein zweites elektronisches Modul (205), das konfiguriert ist, um die zweite Vibration zu analysieren und menschliche Aktivitäten in der überwachten Küstenumgebung zu unterscheiden, die mit der zweiten Vibration zugeordnet sind, und ferner konfiguriert ist, um ein zweites Alarmsignal zu erzeugen, wenn menschliche Aktivitäten erfasst werden;
ein zweites drahtloses Kommunikationsmodul (206), das zum Übertragen des zweiten Alarmsignals an entfernte Orte konfiguriert ist;
wobei das System zum Überwachen einer Küstenumgebung ferner eine Kontrollstation (301) umfasst, wobei die Kontrollstation (301) umfasst: ein drittes drahtloses Kommunikationsmodul (302), das zum Empfangen des ersten Alarmsignals und des zweiten Alarmsignals konfiguriert ist, ein drittes elektronisches Modul, das zum Verarbeiten von Identifizierungsinformationen konfiguriert ist, die dem ersten Alarmsignal und dem zweiten Alarmsignal zugeordnet sind, ein Internetverbindungsmodul, das zum Übertragen der Identifizierungsinformationen an mindestens eine Webanwendung (401) zum Erzeugen eines Alarms konfiguriert ist.

2. System zum Überwachen einer Küstenlinienumgebung nach Anspruch 1, wobei das erste Kommunikationsmodul (106), das zweite Kommunikationsmodul (206) und das dritte Kommunikationsmodul (302) jeweils ein Kommunikationsmodul umfassen, das mit einem WiFi-Protokoll kompatibel ist.

3. System zum Überwachen einer Küstenumgebung nach Anspruch 1 oder 2, wobei die marine Erfassungsvorrichtung (201) ferner ein erstes GPS-Modul (207) umfasst, das zum Erfassen einer ersten geografischen Position der marine Erfassungsvorrichtung (201) konfiguriert ist, wobei aktualisierte Lokalisierungsinformationen über die erste geografische Position in dem von der marine Erfassungsvorrichtung (201) erzeugten zweiten Alarmsignal enthalten sind.

4. System zum Überwachen einer Küstenumgebung nach einem der Ansprüche 1 bis 3, wobei die terrestrische Erfassungsvorrichtung (101) ferner ein zweites GPS-Modul (107) umfasst, das zum Erfassen einer zweiten geografischen Position der terrestrischen Erfassungsvorrichtung konfiguriert ist, wobei aktualisierte Lokalisierungsinformationen über die zweite geografische Position in dem von der terrestrischen Erfassungsvorrichtung (101) erzeugten ersten Alarmsignal enthalten sind.

5. System zum Überwachen einer Küstenumgebung nach einem der Ansprüche 3 oder 4, wobei das erste elektronische Modul (105) beziehungsweise das zweite elektronische Modul (205) ferner konfiguriert sind, um in Echtzeit die Position der terrestrischen Erfassungsvorrichtung (101) beziehungsweise der marinen Erfassungsvorrichtung (201) mittels des zweiten GPS-Moduls (107) oder des ersten GPS-Moduls (207) zu erfassen, und wobei das erste elektronische Modul (105) oder das zweite elektronische Modul (205) ferner konfiguriert sind, um Positionsänderungen zu erfassen, und mittels des ersten drahtlosen Kommunikationsmoduls (106) oder des zweiten drahtlosen Kommunikationsmoduls (206) einen Bewegungsalarm zu senden, um die mögliche Entfernung der terrestrischen Erfassungsvorrichtung (101) oder der marinen Erfassungsvorrichtung (201) aus der überwachten Umgebung zu signalisieren.

6. System zum Überwachen einer Küstenumgebung nach einem der Ansprüche 1 bis 5, wobei die Identifizierungsinformationen mindestens die Position der mindestens einen terrestrischen Erfassungsvorrichtung (101) oder der mindestens einen marinen Erfassungsvorrichtung (201) umfassen, die das erste Alarmsignal oder das zweite Alarmsignal erzeugt hat.

7. System zum Überwachen einer Küstenumgebung nach einem der Ansprüche 1 bis 6, wobei mindestens das erste elektronische Steuermodul (105) oder mindestens das zweite elektronische Steuermodul (205) oder mindestens das dritte elektronische Modul ferner konfiguriert ist, um die vom geophonen Sensor (104) oder dem hydrophonen Sensor (204) jeweils erfassten Signale auf einer Massenspeichereinheit aufzuzeichnen, und wobei die aufgezeichneten Signale anschließend durch Verarbeitungsmittel verarbeitet werden können, um die Zuverlässigkeit der Unterscheidung von menschlichen Aktivitäten in der überwachten Küstenumgebung, die der ersten oder zweiten Vibration zugeordnet ist, zu verbessern.

8. System zum Überwachen einer Küstenumgebung nach einem der Ansprüche 1 bis 7, wobei die terrestrische Erfassungsvorrichtung (101) und die marine Erfassungsvorrichtung (201) jeweils ein Stromversorgungssystem umfassen, das mindestens eine Batterie (108, 208) umfasst, und vorzugsweise Solarzellen (109, 209) zum autonomen Nachladen der mindestens einen Batterie (108, 208') umfassen.

9. System zum Überwachen einer Küstenumgebung nach einem der Ansprüche 1 bis 8, wobei die terrestrische Erfassungsvorrichtung (101) ferner einen wasserdichten Behälter (102) und Bodenverankerungsmittel umfasst, die konfiguriert sind, um das Entfernen des wasserdichten Behälters (102) vom Boden zu verhindern.

10. System zum Überwachen einer Küstenumgebung nach einem der Ansprüche 1 bis 9, wobei die marine Erfassungsvorrichtung (101) ferner Mittel zum Verankern am Meeresboden in der Küstenumgebung umfasst.

11. System zum Überwachen einer Küstenumgebung nach einem der Ansprüche 1 bis 10, wobei die menschlichen Aktivitäten illegale Fischerei-Aktivitäten (303) sind, und wobei das erste elektronische Modul (105) und das zweite elektronische Modul (205) konfiguriert sind, um Alarmsignale mit der ersten Vibration und/oder der zweiten Vibration zu verbinden, wenn sie repräsentativ für Aushub-, Abbruch-, Bohr- oder Schlagtätigkeiten im Meeresboden sind.

12. Verwendung eines Systems zum Überwachen einer Küstenumgebung nach einem der Ansprüche 1 bis 11 zum Überwachen eines Küstenabschnitts und Bekämpfen illegaler Fischerei, vorzugsweise Seedattel-Fischerei, wobei die terrestrische Erfassungsvorrichtung (101) an Land in einem felsigen Küstenabschnitt der Küstenumgebung installiert ist und wobei die marine Erfassungsvorrichtung (201) weiterhin vor demselben oder einem anderen Küstenabschnitt der Küstenumgebung installiert ist, und wobei die Kontrollstation (301) konfiguriert ist, um die Warnung an eine Behörde (402) zum Schutz und zur Überwachung der Küstenumgebung zu übertragen.

13. Verwendung nach Anspruch 12, wobei eine Vielzahl von terrestrischen Erfassungsvorrichtungen an Land installiert ist, und wobei ferner eine Vielzahl von marinen Erfassungsvorrichtungen installiert ist, wobei alle terrestrischen Erfassungsvorrichtungen und marinen Erfassungsvorrichtungen konfiguriert sind, um mit derselben Kontrollstation zu kommunizieren.

## Revendications

1. Système de surveillance d'un environnement de littoral, comprenant au moins un dispositif de détection terrestre (101) et au moins un dispositif de détection marin (201),
dans lequel ledit dispositif de détection terrestre (101) comprend :
un capteur géophonique (104) adapté pour être entraîné dans un sol vers la rive ou sur terre pour détecter une première vibration se propageant dans ledit sol,
un premier module électronique (105) configuré pour analyser ladite première vibration et distinguer des activités humaines dans ledit environnement de littoral surveillé qui sont associées à ladite première vibration, et configuré en outre pour générer un premier signal d'alarme lorsque des activités humaines sont détectées,
un premier module de communication sans fil (106) configuré pour transmettre ledit premier signal d'alarme à des emplacements éloignés ;
et dans lequel ledit dispositif de détection marin (201) comprend :
une bouée (202) configurée pour flotter dans un environnement aquatique,
un capteur hydrophonique (204) supporté par ladite bouée (202) et configuré pour être immergé dans ledit environnement aquatique pour détecter une seconde vibration se propageant dans ledit environnement aquatique,
un deuxième module électronique (205) configuré pour analyser ladite seconde vibration et distinguer des activités humaines dans ledit environnement de littoral surveillé qui sont associées à ladite seconde vibration, et configuré en outre pour générer un second signal d'alarme lorsque des activités humaines sont détectées ;
un deuxième module de communication sans fil (206) configuré pour transmettre ledit second signal d'alarme à des emplacements éloignés ;
dans lequel ledit système de surveillance d'un environnement de littoral comprend en outre un poste de commande (301), dans lequel ledit poste de commande (301) comprend :
un troisième module de communication sans fil (302) configuré pour recevoir ledit premier signal d'alarme et ledit second signal d'alarme,
un troisième module électronique configuré pour traiter des informations d'identification associées audit premier signal d'alarme et audit second signal d'alarme,
un module de connexion Internet configuré pour transmettre lesdites informations d'identification à au moins une application web (401) pour générer une alerte.

2. Système de surveillance d'un environnement de littoral selon la revendication 1, dans lequel ledit premier module de communication (106), ledit deuxième module de communication (206) et ledit troisième module de communication (302) comprennent chacun un module de communication conforme à un protocole WiFi.

3. Système de surveillance d'un environnement de littoral selon la revendication 1 ou 2, dans lequel ledit dispositif de détection marin (201) comprend en outre un premier module GPS (207) configuré pour acquérir une première position géographique dudit dispositif de détection marin (201), dans lequel des informations de localisation mises à jour concernant ladite première position géographique sont comprises dans ledit second signal d'alarme généré par ledit dispositif de détection marin (201).

4. Système de surveillance d'un environnement de littoral selon l'une quelconque des revendications 1 à 3, dans lequel ledit dispositif de détection terrestre (101) comprend en outre un second module GPS (107) configuré pour acquérir une seconde position géographique dudit dispositif de détection terrestre, dans lequel des informations de localisation mises à jour concernant ladite seconde position géographique sont comprises dans ledit premier signal d'alarme généré par ledit dispositif de détection terrestre (101).

5. Système de surveillance d'un environnement de littoral selon l'une quelconque des revendications 3 ou 4, dans lequel ledit premier module électronique (105) ou ledit deuxième module électronique (205) sont en outre configurés pour détecter en temps réel la position dudit dispositif de détection terrestre (101) ou dudit dispositif de détection marin (201), respectivement, au moyen dudit second module GPS (107) ou dudit premier module GPS (207), et dans lequel ledit premier module électronique (105) ou ledit second module électronique (205) sont en outre configurés pour détecter tout changement de position et pour envoyer, au moyen dudit premier module de communication sans fil (106) ou dudit deuxième module de communication sans fil (206), une alarme de déplacement afin de signaler l'enlèvement éventuel dudit dispositif de détection terrestre (101) ou dudit dispositif de détection marin (201) de l'environnement surveillé.

6. Système de surveillance d'un environnement de littoral selon l'une quelconque des revendications 1 à 5, dans lequel lesdites informations d'identification comprennent au moins la position dudit au moins un dispositif de détection terrestre (101) ou dudit au moins un dispositif de détection marin (201) qui a généré ledit premier signal d'alarme ou ledit second signal d'alarme.

7. Système de surveillance d'un environnement de littoral selon l'une quelconque des revendications 1 à 6, dans lequel au moins ledit premier module de commande électronique (105) ou au moins ledit deuxième module de commande électronique (205) ou au moins ledit troisième module électronique est en outre configuré pour enregistrer lesdits signaux détectés respectivement par ledit capteur géophonique (104) ou ledit capteur hydrophonique (204) sur une unité de stockage de masse, et dans lequel les signaux enregistrés peuvent ensuite être traités par un moyen de traitement afin d'améliorer la fiabilité de ladite distinction d'activités humaines dans ledit environnement de littoral surveillé, associées à ladite première ou seconde vibration.

8. Système de surveillance d'un environnement de littoral selon l'une quelconque des revendications 1 à 7, dans lequel ledit dispositif de détection terrestre (101) et ledit dispositif de détection marin (201) comprennent chacun un système d'alimentation électrique comprenant au moins une batterie (108, 208), et comprennent de préférence des piles solaires (109, 209) pour recharger de façon autonome ladite au moins une batterie (108, 208).

9. Système de surveillance d'un environnement de littoral selon l'une quelconque des revendications 1 à 8, dans lequel ledit dispositif de détection terrestre (101) comprend en outre un contenant étanche (102) et un moyen d'ancrage au sol configuré pour empêcher l'enlèvement dudit contenant étanche (102) dudit sol.

10. Système de surveillance d'un environnement de littoral selon l'une quelconque des revendications 1 à 9, dans lequel ledit dispositif de détection marin (101) comprend en outre un moyen d'ancrage au fond marin dans ledit environnement de littoral.

11. Système de surveillance d'un environnement de littoral selon l'une quelconque des revendications 1 à 10, dans lequel lesdites activités humaines sont des activités de pêche illégale (303), et dans lequel ledit premier module électronique (105) et ledit deuxième module électronique (205) sont configurés pour associer des signaux d'alarme à ladite première vibration et/ou à ladite seconde vibration lorsqu'elles sont représentatives d'activités d'impact, de forage, de démolition ou d'excavation de fond marin.

12. Utilisation d'un système de surveillance d'un environnement de littoral selon l'une quelconque des revendications 1 à 11 pour surveiller une bande côtière et lutter contre la pêche illégale, de préférence la pêche de dattes de mer, dans laquelle ledit dispositif de détection terrestre (101) est installé sur la terre sèche dans une bande côtière rocheuse dudit environnement de littoral, et dans laquelle ledit dispositif de détection marin (201) est en outre installé au large de cette même bande côtière ou d'une bande côtière différente dudit environnement de littoral, et dans laquelle ledit poste de commande (301) est configuré pour transmettre ladite alerte à une autorité (402) de protection et de surveillance dudit environnement de littoral.

13. Utilisation selon la revendication 12, dans laquelle une pluralité de dispositifs de détection terrestre est installée sur la terre sèche, et dans laquelle une pluralité de dispositifs de détection marins est en outre installée, dans laquelle tous les dispositifs de détection terrestre et les dispositifs de détection marins sont configurés pour communiquer avec le même poste de commande.
